# EUROPEAN PATENT SPECIFICATION

(11) **EP 2 923 522 B1**
(45) Date of publication and mention of the grant of the patent: **28.11.2018**
(21) Application number: 13862141.2
(22) Date of filing: 16.12.2013
(51) Int. Cl.: H04W 72/12

(54) **SYSTEMS AND METHODS FOR INTERFERENCE AVOIDANCE, CHANNEL SOUNDING, AND OTHER SIGNALING FOR MULTI-USER FULL DUPLEX TRANSMISSION**
SYSTEME UND VERFAHREN ZUR INTERFERENZUNTERDRÜCKUNG, KANALKLANGMESSUNG UND SONSTIGEN SIGNALISIERUNG FÜR EINE MEHRBENUTZER-VOLLDUPLEXÜBERTRAGUNG
SYSTÈMES ET PROCÉDÉS POUR ÉVITER UNE INTERFÉRENCE, ESTIMER UNE VOIE ET EXÉCUTER UNE AUTRE SIGNALISATION DANS UNE TRANSMISSION MULTIUTILISATEUR EN DUPLEX TOTAL

(30) Priority: 14.12.2012 US 201261737627 P; 13.03.2013 US 201313802230
(43) Date of publication of application: 30.09.2015
(73) Proprietor: Huawei Technologies Co., Ltd., Longgang District Shenzhen, Guangdong 518129 (CN)
(72) Inventor: ZHU, Peiying, Kanata, Ontario K2M 2L4 (CA); TONG, Wen, Ottawa, Ontario K2C 4A7 (CA); MA, Jianglei, Ottawa, Ontario K2M 2W5 (CA)
(74) Representative: Körber, Martin Hans
(86) International application number: PCT/CN2013/089529
(87) International publication number: WO 2014/090199

(56) References cited:
- WO-A1-03/017696
- WO-A1-2012/148414
- CN-A- 101 242 640
- CN-A- 101 877 853
- CN-A- 101 895 990
- GB-A- 2 485 387
- US-A1- 2010 267 408
- SHAOYI XU ET AL: "Effective Interference Cancellation Mechanisms for D2D Communication in Multi-Cell Cellular Networks", VEHICULAR TECHNOLOGY CONFERENCE (VTC SPRING), 2012 IEEE 75TH, IEEE, 6 May 2012 (2012-05-06), pages 1-5, XP032202622, DOI: 10.1109/VETECS.2012.6240205 ISBN: 978-1-4673-0989-9
- TETSUSHI ABE ET AL: "Radio Interface Technologies for Cooperative Transmission in 3GPP LTE-Advanced", IEICE TRANSACTIONS ON COMMUNICATIONS, COMMUNICATIONS SOCIETY, TOKYO, JP, vol. E94-B, no. 12, 1 December 2011 (2011-12-01), pages 3202-3210, XP001571972, ISSN: 0916-8516, DOI: 10.1587/TRANSCOM.E94.B.3202

## Description

### FIELD OF INVENTION

The present invention relates to a method and a network component for wireless communications as set forth in claims 1 and 8 respectively, and, in particular embodiments, to a method and a network component for interference avoidance for multi-user full duplex transmission and to channel sounding using full duplex transmission.

### BACKGROUND

New technologies such as coordinated multi-point (CoMP), interference alignment (IA), dirty paper coding (DPC), massive multiple-input multiple-output (MIMO), etc. may be some of the keys to capacity enhancement for wireless systems. However, all of the benefits provided by these technologies may not be realized due to the requirements for precise channel knowledge. For a frequency division duplex (FDD) system, various channel feedback schemes have been proposed. However, the overhead, accuracy, and feedback delay are still major roadblocks. Recently, interest in full duplex transmission technology has surged in the quest to increase spectrum efficiency. Several practical systems have demonstrated that a full duplex transmission system may cancel self-interference from the transmitter to its own receiver for low power transmission.

For example, GB 2485387A refers to a wireless communication system using scheduling half duplex communication within a communication cell.

### SUMMARY

In accordance with an embodiment, a method for scheduling transmissions in a multi-user wireless system is provided, the method comprising:
- determining, by a transmission point, at least one neighboring wireless device for each of a plurality of wireless devices located within a coverage area of the transmission point;
- performing a first scheduling of scheduling, by the transmission point, a wireless device among the plurality of devices, according to neighboring information of the at least one neighboring device neighboring the wireless device, to transmit data over different time-frequency resources than those in which the at least one neighboring device is scheduled to receive data, and performing the first scheduling for each of the wireless devices of the plurality of wireless devices;
- performing a second scheduling of scheduling, by the transmission point, the wireless device of the plurality of wireless devices to transmit data to the transmission point on a time frequency resource at a same time on which at least one non-neighbor wireless device not neighboring the wireless device is scheduled to receive data from the transmission point on the time-frequency resource, and performing the second scheduling for each of the wireless devices of the plurality of wireless devices.

In accordance with another embodiment, a network component is provided configured to perform the above method.

### BRIEF DESCRIPTION OF THE DRAWINGS

For a more complete understanding of the present invention, and the advantages thereof, reference is now made to the following descriptions taken in conjunction with the accompanying drawing, in which:
Figure 1 illustrates a network for communicating data;
Figures 2A-2C illustrate an embodiment system for BTS scheduling of UEs transmission and reception times;
Figures 3A-3C illustrate an embodiment system for multiple BTS scheduling of UEs transmission and reception times;
Figures 4A - 4C illustrate an embodiment system for BTS scheduling of UEs for UE to BTS channel-sounding;
Figures 5A-5C illustrate an embodiment system for multiple BTS scheduling of UE to BTS channel sounding;
Figure 6 illustrates a flowchart of an embodiment method for scheduling of UEs; and
Figure 7 is a processing system that can be used to implement various embodiments.

### DETAILED DESCRIPTION

The making and using of the presently preferred embodiments are discussed in detail below. It should be appreciated, however, that the present invention provides many applicable inventive concepts that can be embodied in a wide variety of specific contexts. The specific embodiments discussed are merely illustrative of specific ways to make and use the invention, and do not limit the scope of the invention.

Despite the demonstrated practical systems for self-interference correction in full duplex transmission, the question remains as to whether full duplex transmission can achieve very high self-interference cancellation when receiving data, especially in cellular systems. In addition, it is still costly for a terminal to perform full duplex transmission. Furthermore, in a multi-user access environment, even if self-interference can be cancelled, there may also be interferences from neighboring user equipment (UEs), which could impact a UE's data reception significantly. On the other hand, device-to-device self-discovery is being investigated in both WiFi and cellular standard bodies. It is expected that the position information of UEs may be readily available either via GPS or via positioning services. In various embodiments, the UE may monitor its neighbor's interference level.

In a multi-user access environment, even if a full duplex transmission can reduce or cancel self-interference, it may still be subject to other users' interference. This interference could potentially block the data reception. Various embodiments provide a scheme to avoid interference from other UEs via scheduling based on UE neighboring list information for full duplex transmission. Various embodiments further provide a scheme to obtain channel information based on UE location, scheduling information, device to device discovery and base transceiver station (BTS) full duplex transmission (FDT) capability with relaxed self-interference suppression requirements. In various embodiments, the UE neighboring list may also include the indication of interference level. The BTS can use this additional information to aid the UE scheduling. The UE neighboring list may also be treated as a logical neighboring list, where a neighbor of a UE is defined as the one whose interference to this UE is above a certain level. The BTS can also create this logical neighboring list based on the physical neighboring list and use the logical list for scheduling.

Benefits of an embodiment may include the enablement of multi-user access for full duplex transmission, which may increase overall capacity up to about two times. Other benefits of an embodiment may include the enablement of CoMP, cloud radio access network (CRAN), IA and massive MIMO for FDD without additional channel state feedback overhead and for TDD without calibration, thus increasing overall capacity.

In an embodiment, assuming that both the BTS and UE are capable of FDT, the BTS forms a neighbor list of UEs via device discovery, and/or UE location discovery, and/or GPS, and/or using UE mobility information and prediction, and UE interference measurement. The BTS schedules a UE's data transmission on downlink (DL) frequency at the resources not used by its neighbors to avoid interference on data reception of other UEs. In an alternative embodiment, the BTS can divide UEs into multiple groups based on a reference signal received power (RSRP) or path loss measurement, and schedule UEs from different groups to avoid interference.

In another embodiment, assuming that the BTS is capable of FDT, whether the UE is or is not, the BTS forms a neighbor list of UEs via device discovery, and/or UE location discovery, and/or GPS, and/or using mobility information and prediction, and UE interference measurement. The BTS schedules UEs sounding on DL frequency to avoid interference on data reception of other UEs. As used herein, the terms sounding or channel sounding may be used interchangeably and may include methods for determining channel state information and/or the quality of a wireless channel. The main purpose of sounding is to determine the channel state information. Sounding is a mechanism in which a pilot sequence is sent by a UE and the BTS determines the channel response based on the received pilots. For an orthogonal frequency-division multiplexing (OFDM) system, the full channel state information can be obtained by interpolating the channels based on measured channels on pilots. Multiple UE's pilot can be sent simultaneously via frequency, code, and time division. An OFDM is a method of encoding digital data on multiple carrier frequencies (often called multiple sub-carriers). For an OFDM system, multiple subcarriers in frequency and time domain can be assigned to a UE to transmit data, where those subcarriers are referred as resources. The quality of the wireless channel may be determined based on the signal strength, the amount of interference, bandwidth, throughput, or other indicia of channel quality. The quality of the wireless channel may also be determined based on a combination of factors.

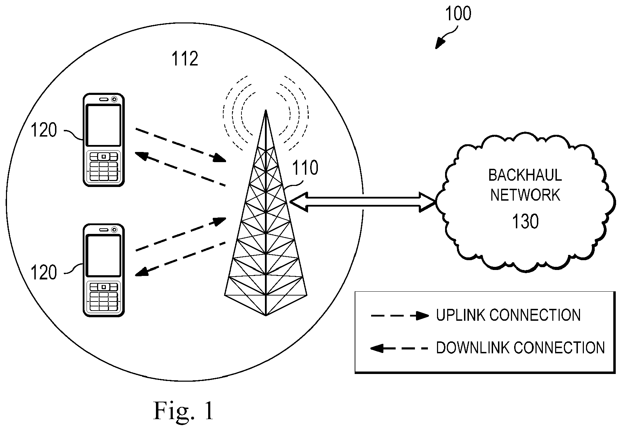

FIG. 1 illustrates a network 100 for communicating data. The network 100 includes an access point (AP) 110 having a coverage area 112, a plurality of user equipment (UEs) 120, and a backhaul network 130. As used herein, the term AP may also be referred to as a transmission point (TP), a BTS, or an enhanced base station (eNB), and the different terms may be used interchangeably throughout this disclosure. The AP 110 may comprise any component capable of providing wireless access by, inter alia, establishing uplink (dashed line) and/or downlink (dotted line) connections with the UEs 120, such as a BTS, an eNB, a femtocell, and other wirelessly enabled devices. The UEs 120 may comprise any component capable of establishing a wireless connection with the AP 110. The backhaul network 130 may be any component or collection of components that allow data to be exchanged between the AP 110 and a remote end (not shown in Figure 1). In some embodiments, the network 100 may comprise various other wireless devices, such as relays, femtocells, etc.

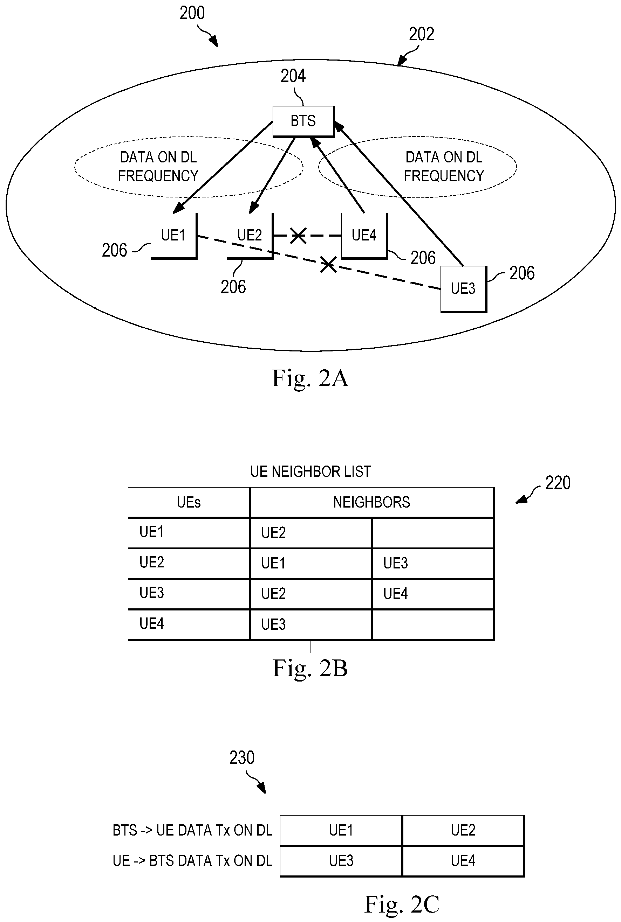

Figures 2A-2C illustrate an embodiment system 200 for BTS scheduling of UEs transmission and reception interval over the same channel resources. The system 200 may be similar to the network 100 illustrated in Figure 1. As illustrated in Figure 2A, the system 200 may include a BTS 204 and a plurality of UEs 206. The BTS 204 may have a coverage area 202 as illustrated. The BTS 204 may be any device that is capable of establishing uplinks (ULs) and downlinks (DLs) with the UEs 206. The DLs refer to the transmission links from the BTS 204 to the UEs 206 and the ULs refer to the transmission links from the UEs 206 to the BTS 204.

The BTS 204 may utilize full duplex allowing the BTS 204 to send and receive data on the same channel at the same time. As used herein the channel refers to the frequency carrier. The DL and the UL in a full duplex system may use the same channel. The BTS 204 may include a processing system capable of receiving or determining neighbors of the UEs 206 and determining a schedule for the UEs 206 to transmit and receive based on the identified neighbors. The UEs 206 may also be referred to as wireless devices. The UEs 206 may be any device capable of establishing a wireless connection with the BTS 204. Examples of wireless devices include mobile phones, smart phones, table computers, laptop computers, and the like. One, several, or all of the UEs 206 may be capable of full duplex transmission and reception. Alternatively, none of the UEs 206 may be capable of full duplex transmission and reception. Thus, an embodiment allows the BTS 204 to work in full duplex, while the UE 206 works in full or half duplex. As used herein, a device operating in full duplex mode may transmit and receive on the same channel simultaneously. As used herein, in a time division duplex (TDD) system, a device operating in half duplex mode may both transmit and receive on the same channel, but may not do so at the same time (e.g., the device may transmit on the channel and then receive on the same channel at a later time). In a frequency division duplex (FDD) system, the UE transmits and receives simultaneously, but on different frequency channels. The dashed lines with an "X" indicate that the UEs 206 connected by the dashed lines are not neighbors of one another.

Figure 2B illustrates a UE 206 neighbor list 220 for the UEs 206 identified in Figure 2A. The neighbors of UE1 may be UE2. The neighbors of UE2 may be UE1 and UE3. The neighbors of UE3 may be UE2 and UE4. The neighbors of UE4 may be UE3. The neighbor list for each UE 206 may be determined by the UE 206 and transmitted to the BTS 204 from the UE 206. The BTS 204 may use the neighbor list for each UE 206 to compile a master neighbor list for all the UEs 206 in the BTS's 204 coverage area 202. Each UE 206 may determine its neighbors by measuring a signal strength of other UEs 206. Some beacons/pilots may be inserted or dedicated for such measurement purposes. The signal from each UE 206 may identify, provide an identifier for, or otherwise provide an identification of the UE 206. If the signal strength of a UE 206 exceeds a threshold, then the UE 206 may be considered a neighbor. UEs 206 whose signal strength at a specific UE 206 does not exceed a threshold may not be considered neighbors since their signals may not be sufficiently strong to cause significant interference at the measuring UE 206. The signals received by the UEs 206 from other UEs 206 may include an identifier. The definition of a neighbor or neighboring wireless device may vary depending on implementation and, in an embodiment, may be a wireless device that is capable of or is causing interference with another wireless device.

Alternatively, the BTS 204 may determine the location(s) of the UEs 206 (e.g., using a global positioning system (GPS) or other location determining method) and determine a neighbor list for each UE 206 based on their proximity to other UEs 206. In addition to the position information, the BTS 204 may also determine the type of each UE 206 and use this information in determining a neighbor list for each UE 206 since different types of UEs 206 may have different signal strength characteristics. The BTS 204 may also use the neighbor lists of UEs 206 that provide the information to the BTS and may determine the neighbor list for other UEs 206 that may be incapable of determining a neighbor list independently. The combination of the UE 206 determined neighbors and the BTS 204 determined neighbors may be used to create the master list of UE 206 neighbors.

The neighbor lists may change dynamically with time since UEs 206 may move within the coverage area 202, may move outside the coverage area 202, or may be powered down (e.g., turned off). Additionally, other UEs 206 may be powered on (e.g., turned on) or may enter the coverage area 202. Thus, the UEs 206 that may be considered neighbors of each other at one time may not be neighbors at another time. Since the neighbor lists may change dynamically with time, the schedule determined by the BTS 204 may change with time. The master neighbor list and the schedule may be updated periodically or when the BTS 204 determines that one or more of the UEs 206 neighbors has changed.

From this master neighbor list, the BTS 204 may determine a transmission and reception schedule 230 for the UEs 206. The transmission and reception schedule may be determined such that no neighbor to a UE 206 may transmit using the same resources as the UE 206 when the UE 206 is using those resources to receive data, thereby mitigating interference effects experienced by the receiving UE 206 caused by other UEs 206 in the coverage area 202.

As illustrated in Figure 2C, any non-UEl neighbors, i.e., UE3 and UE4, can transmit data using the same resources as UE1 while UE1 receives data from the BTS 204 (e.g., at the same time on the same sub-carrier as UE1). Similarly, any non-UE2 neighbors, i.e., UE4, may transmit data using the same resources as UE2 (e.g., at the same time on the same sub-carrier as UE2). Conversely, when UE3 receives data from the BTS 204, UE 1 may transmit data to the BTS 204 on the same resources. However, UE2 and UE4 may not transmit data using the same resources since they are neighbors to UE 3. It should be noted that any UE 206 that is capable of full duplex transmission may receive and transmit data simultaneously since the UE 206 may be aware of its self-interference and may utilize well known methods for cancelling or mitigating the self-interference.

Although described with reference to four UEs 206, system 200 may include any number of UEs 206 and is not limited to four. Additionally, a UE 206 may have more than two neighbors, may only have one neighbor, or may have no neighbors.

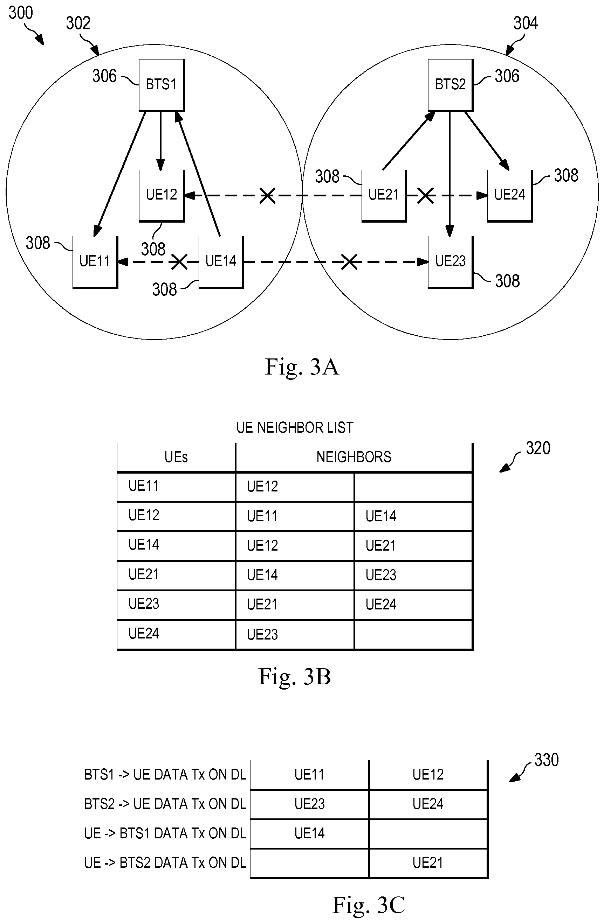

Figures 3A-3C illustrate an embodiment system 300 for multiple BTS scheduling of UEs transmission and reception times. The system 300 may be similar to the system 200 illustrated in Figure 2A except for the inclusion of multiple BTSs instead of a single BTS. As illustrated in Figure 3A, the system 300 may include multiple BTS's 306 and a plurality of UEs 308. Each BTS 306 may have its own coverage area 302, 304. As illustrated, BTS1 has a coverage area 302 which may include UE11, UE12, and UE14. BTS2 may have a coverage area 304 which may include UE21, UE23, and UE24. Each BTS 306 may be similar to BTS 204 in Figure 2A. The UEs 308 may be similar to the UEs 206 in Figure 2A. The BTS's 306 may determine the neighbors for the plurality of UEs 308 as described above with reference to Figures 2A-2C.

UE 14 and UE 21 may be on the edge of their respective coverage areas 302, 304. As such, UE14 and UE 21 may be neighbors to one another and may potentially cause interference in one another even though they communicate with different BTSs 306. Therefore, BTS1 and BTS2 may coordinate their transmission and reception schedules such that UE14 and UE21 are not transmitting data while the other one is receiving data. In an embodiment, a master neighbor list may be created that includes UE neighbors for both coverage areas 302, 304. BTS1 may determine a transmission and reception schedule for all the UEs 308 in both coverage areas 302 and 304. The schedule may be transmitted to the BTS2 through a backhaul network (not shown) such as backhaul network 130 depicted in Figure 1. Both the BTS1 and the BTS2 may use the schedule to prevent neighbor UEs 308 in both the UEs own coverage area 302, 304 and in neighboring coverage areas 302, 304 from transmitting when a neighbor UE 308 is receiving data from the BTS 306. The BTS1 and the BTS2 may alternate creating the schedules or periodically or occasionally switch which one creates the schedules. Alternatively, both BTS's 306 may create the schedules using the same algorithm to computer the schedules based on the same neighbor list, thereby ensuring that both BTS's 306 execute the same schedule. In another embodiment, a central controller (not shown in Figure 3A) may take care of the scheduling for both BTS1 and BTS2 and forward the schedule to both BTS1 and BTS2.

Figure 3B illustrates a UE 308 neighbor list 320 for the UEs 308 identified in Figure 3A. As shown, the neighbors for UE11 may be UE12, the neighbors for UE12 may be UE11 and UE14, the neighbors for UE14 may be UE12 and UE21, the neighbors for UE21 may be UE 14 and UE 23, the neighbors for UE 23 may be UE21 and UE 24, and the neighbors for UE24 may be UE23.

As illustrated in Figure 3C, a partial UE transmission and reception schedule 330 is shown based on the neighbor list of Figure 3B. The partial UE transmission and reception schedule 330 does not show the schedule for all of the UEs for all times. As shown, UE11 may receive data from BTS1, UE23 may receive data from BTS2, and UE14 may transmit data to the BTS1 at the same time. UE12, UE24, and UE21 may not transmit at the time this time. At another time, UE12 may receive data from BTS1, UE24 may receive data from BTS2, and UE 21 may transmit data to BTS2 at the same time, but UE11, UE23, and UE14 may not transmit at this time. In this manner, no UEs 308 are transmitting while their neighbor UEs 308 are receiving data from the BTS 306, thereby eliminating a source of interference for UE2 308 that is receiving data.

Alternatively, rather than sharing scheduling information with each other, each BTS 306 may reserve a region for cell edge UE's sounding. Also, in an embodiment, both BTS1 and BTS2 may receive sounding signal from an edge UE 308 that is near the edge of both coverage area 302 and coverage area 304 (e.g., from UE 14)

Although system 300 is described with reference to two BTS's 306 and to six UEs 308, the number of BTS's may be greater than two and the number of UEs may be different in some embodiments. Additionally, a UE 308 may have more than two neighbors or may have no neighbors.

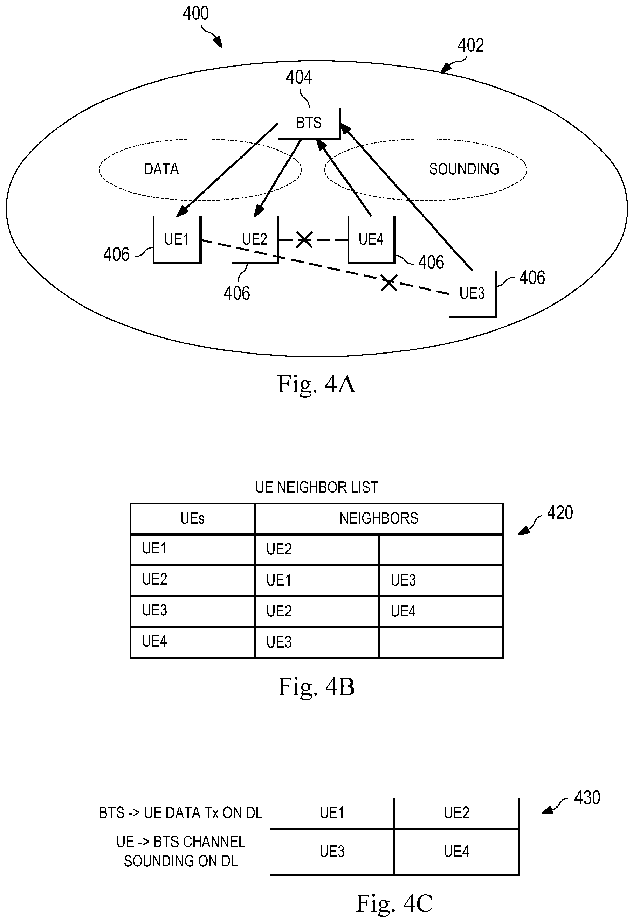

Figures 4A-4C illustrate another embodiment system 400 for BTS scheduling of UEs. The system 400 may be substantially similar to system 200 depicted in Figure 2A. The system 200 may comprise a BTS 404 and a plurality of UEs 406. The BTS 404 may have a coverage area 402. The BTS 404 may be substantially similar to BTS 204 depicted in Figure 2A and the UEs 406 may be substantially similar to the UEs 206 depicted in Figure 2A. The BTS 404 may receive or determine a master neighbor list for the UEs 406 in its coverage area 402. The BTS 406 may determine the neighbors for the UEs 406 in any number of manners such as those described above with reference to Figures 2A-2C. From this neighbor list, the BTS 404 may schedule BTS to UE data transmissions on the DL and schedule the non-neighboring UEs 406 to perform channel sounding on the same DL at the same time. Neighboring UEs 406 may not perform channel sounding while one of their neighbor UEs 406 is receiving a BTS to UE data transmission on the DL.

The BTS 404 may schedule the BTS to UE data transmission on DL first, and then schedule UE to BTS channel sounding on DL for non-neighboring UEs to avoid interfering BTS to DL data transmission. Alternatively, the BS could schedule UE to BTS channel sounding on DL first, then schedule BTS to UE data transmission on DL. For high mobility UEs, the BTS could reserve dedicated resources so that there is no sounding on those resources or can update a neighbor list based on mobility information and prediction. In an embodiment, a high mobility UE's sounding channel may be transmitted in a UL frequency. For a cell edge UE, if BTSs 404 do not coordinate the scheduling, the dedicated resources could also be used for BTS to UE data transmission on DL.

Figure 4B illustrates a UE neighbor list 420 for the UEs identified in Figure 4A. As shown, the neighbors of UE1 may be UE2, the neighbors of UE2 may be UE1 and UE3, the neighbors of UE3 may be UE2 and UE4, and the neighbors of UE4 may be UE3. A partial schedule 430 for channel sounding and BTS to UE data transmission is shown in Figure 4C. Channel sounding for any non-UEl neighbors, e.g., UE3 and UE4, may be performed when BTS to UE data transmission is occurring for UE1. However, no neighbors of UE1, e.g., UE2 may perform channel sounding while UE1 is receiving data from the BTS 404. As depicted, BTS to UE data transmission on the DL may be performed for UE1 while UE3 (a non-neighboring UE to UE1) performs UE to BTS channel sounding on the DL. BTS to UE data transmission on the DL may be performed for UE2 while UE4 (a non-neighboring UE to UE2) performs UE to BTS channel sounding on the DL. UEs 406 that are performing channel sounding on the DL may also transmit data on the UL at the same time using carrier aggregation (CA).

Although described with reference to four UEs 406, system 400 may include any number of UEs 406 and is not limited to four. Additionally, a UE 406 may have more than two neighbors, may only have one neighbor, or may have no neighbors.

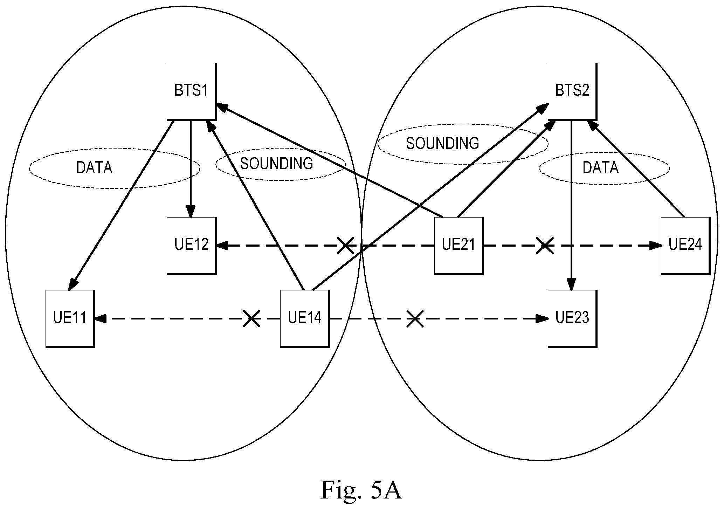

Figures 5A-5C illustrate an embodiment system 500 for multiple BTS scheduling of UE to BTS sounding. System 500 may be substantially similar to system 300 depicted in Figure 3. System 500 may comprise multiple BTS's 506 and multiple UEs 510. Each BST 506 may have a corresponding coverage area 502. The BTS 506 may determine neighboring devices in a similar manner to those described above with reference to Figures 2A-2C. In a manner similar to system 300, the BTS 506 in system 500 may coordinate the scheduling of UE to BTS sounding with other BTS's 506 such that UEs 510 on the edge of a coverage area 502, 504 that are near a UE in a different coverage area 502, 504 will be scheduled such that when they perform sounding on the DL, their sounding transmissions will not interfere with a BTS to UE data transmission in a neighboring UE 502 that may be in a different coverage area 502, 504 corresponding to a different BTS 506.

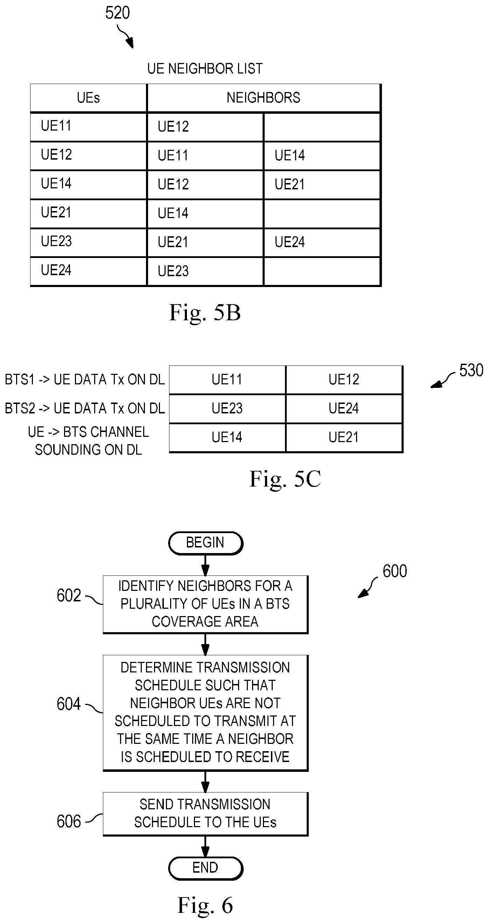

Figure 5B illustrates a UE neighbor list 520 for the UEs identified in Figure 5A. As shown, the neighbors of UE11 may be UE12, the neighbors of UE12 may be UE11 and UE14, the neighbors of UE14 may be UE12 and UE21, the neighbors of UE21 may be UE 14, the neighbors of UE23 may be UE 21 and UE 24, and the neighbors of UE24 may be UE23. A partial schedule 530 for channel sounding and BTS to UE data transmission is shown in Figure 5C. Channel sounding for any non-UEl 1 neighbors, e.g., UE14, UE21, UE23, and UE24, may be performed when BTS to UE data transmission is occurring for UE11. However, no neighbors of UE11, e.g., UE12 may perform channel sounding while UE11 is receiving data from the BTS1 506. As depicted, BTS to UE data transmission on the DL may be performed for UE11 and UE23 while UE14 (a non-neighboring UE to UE11 and UE23) performs UE to BTS channel sounding on the DL. BTS to UE data transmission on the DL may be performed for UE12 and UE24 while UE21 (a non-neighboring UE to UE12 and UE24) performs UE to BTS channel sounding on the DL.

Although system 500 is described with reference to two BTS's 506 and to six UEs 510, the number of BTS's may be greater than two and the number of UEs may be different in some embodiments. Additionally, in an embodiment, a UE 510 may have more than two neighbors or may have no neighbors.

Embodiments are not limited to UE to BTS channel sounding on DL, for example, embodiments may include UE to BTS data and control signaling transmission on DL frequency carrier, including low data rate spreading, low data rate traffic, highly protected control channels, etc. In an embodiment, if the UE sends low rate data on DL, it may be preferable to spread data (for example via code division multiple access (CDMA), or spreading over OFDM sub-carriers) so that the self-interference cancellation can be relaxed. Similarly, if highly protected control channel information is transmitted from UE on DL, self-interference cancellation can also be relaxed. Embodiments also may be used for full duplex transmission on UL. Moreover, for a TDD system, embodiments may include creation of a customized DL/UL configuration. In addition, there are a variety of ways to signal the data transmission and sounding. Also, channel sounding may be scheduled periodically or occasionally at aperiodic intervals. Furthermore, although described in terms of channels, the disclosed systems and methods may be applied to any time-frequency resource for communicating data between a BTS and a wireless device.

Figure 6 illustrates a flowchart of an embodiment method 600 for scheduling of UEs. The method 600 may be implemented, for example, in a BTS such as BTS 110 in Figure 1, BTS 204 in Figure 2A, BTS's 306 in Figure 3A, BTS 404 in Figure 4A, or BTS's 506 in Figure 5A. The method 600 may begin at 602 where the BTS may identify the neighbors for a plurality of UEs in the BTS coverage area. In an embodiment, some or all of the UEs in the BTS's coverage area may report their neighbors to the BTS. The BTS may also identify the neighbors for UEs that are in other BTS's coverage areas. At block 604, the BTS may determine a transmission schedule for the plurality of UEs such that a UE is not scheduled to transmit when a neighboring UE is scheduled to receive a BTS to UE transmission data. A UE may perform UE to BTS transmissions during a time when a BTS to UE data transmission is scheduled for a non-neighboring UE. UE to BTS transmissions may include UE to BTS channel sounding, UE to BTS data transmission, and UE to BTS data and control signaling transmission on DL, including low data rate spreading, highly protected control channels, etc. At block 606, the BTS may transmit the transmission schedules to the UEs, after which, the method 600 may end.

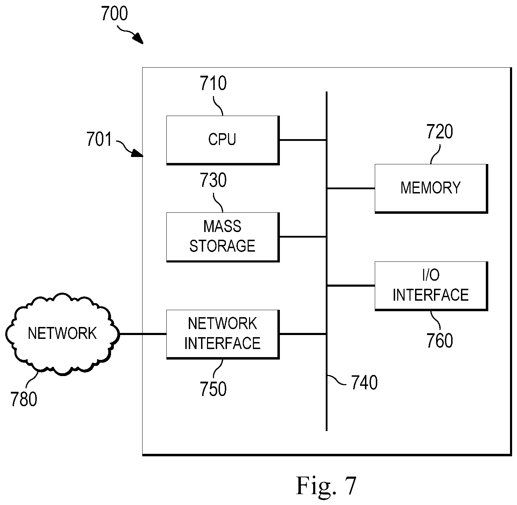

Figure 7 is a block diagram of a processing system 700 that may be used for implementing the devices and methods disclosed herein. Specific devices may utilize all of the components shown, or only a subset of the components, and levels of integration may vary from device to device. Furthermore, a device may contain multiple instances of a component, such as multiple processing units, processors, memories, transmitters, receivers, etc. The processing system 700 may comprise a processing unit 701 equipped with one or more input/output devices, such as a speaker, microphone, mouse, touchscreen, keypad, keyboard, printer, display, and the like. The processing unit 701 may include a central processing unit (CPU) 710, memory 720, a mass storage device 730, a network interface 750, and an I/O interface 760 connected to a bus 740.

The bus 740 may be one or more of any type of several bus architectures including a memory bus or memory controller, a peripheral bus, video bus, or the like. The CPU 710 may comprise any type of electronic data processor. The memory 720 may comprise any type of system memory such as static random access memory (SRAM), dynamic random access memory (DRAM), synchronous DRAM (SDRAM), read-only memory (ROM), a combination thereof, or the like. In an embodiment, the memory 720 may include ROM for use at boot-up, and DRAM for program and data storage for use while executing programs.

The mass storage device 730 may comprise any type of storage device configured to store data, programs, and other information and to make the data, programs, and other information accessible via the bus 740. The mass storage device 730 may comprise, for example, one or more of a solid state drive, hard disk drive, a magnetic disk drive, an optical disk drive, or the like.

The I/O interface 760 may provide interfaces to couple external input and output devices to the processing unit 701. The I/O interface 760 may include a video adapter. Examples of input and output devices may include a display coupled to the video adapter and a mouse/keyboard/printer coupled to the I/O interface. Other devices may be coupled to the processing unit 701, and additional or fewer interface cards may be utilized. For example, a serial interface such as Universal Serial Bus (USB) (not shown) may be used to provide an interface for a printer.

The processing unit 701 may also include one or more network interfaces 750, which may comprise wired links, such as an Ethernet cable or the like, and/or wireless links to access nodes or different networks. The network interface 701 allows the processing unit to communicate with remote units via the networks 780. For example, the network interface 750 may provide wireless communication via one or more transmitters/transmit antennas and one or more receivers/receive antennas. In an embodiment, the processing unit 701 is coupled to a local-area network or a wide-area network for data processing and communications with remote devices, such as other processing units, the Internet, remote storage facilities, or the like.

## Claims

1. A method for scheduling transmissions in a multi-user wireless system, the method comprising:
• determining, by a transmission point, at least one neighboring wireless device for each of a plurality of wireless devices located within a coverage area of the transmission point (S 602);
• performing a first scheduling of scheduling, by the transmission point, a wireless device among the plurality of devices, according to neighboring information of the at least one neighboring device neighboring the wireless device, to transmit data over different time-frequency resources than those in which the at least one neighboring device is scheduled to receive data, and performing the first scheduling for each of the wireless devices of the plurality of wireless devices (S 604);
• performing a second scheduling of scheduling, by the transmission point, the wireless device of the plurality of wireless devices to transmit data to the transmission point on a time frequency resource at a same time on which at least one non-neighbor wireless device not neighboring the wireless device is scheduled to receive data from the transmission point on the time-frequency resource, and performing the second scheduling for each of the wireless devices of the plurality of wireless devices.

2. The method of claim 1, further comprising scheduling at least one wireless device of the plurality of wireless devices to transmit one of channel sounding, control signaling, and low data rate traffic on the time-frequency resource.

3. The method of claim 1, further comprising coordinating schedules with an other BTS, wherein coordinating schedules with another BTS comprises determining neighbors for at least one wireless device of the plurality of wireless devices in the coverage area for the BTS and in a coverage area for the other BTS, wherein at least one wireless device in the coverage area for the BTS is a neighbor to at least one wireless device in the coverage area for the other BTS.

4. The method of claim 1, further comprising coordinating schedules with an other BTS, wherein coordinating schedules with an other BTS comprises determining a schedule for at least one wireless device of the plurality of wireless devices in the coverage area for the BTS and for at least one of the wireless devices in a coverage area for the other BTS and transmitting the schedule to the other BTS.

5. The method of claim 1, wherein dedicated resources are allocated to at least one wireless device of the plurality of wireless devices on an edge of the coverage area for the transmission point.

6. The method of claim 1, wherein the transmission point operates in full duplex mode.

7. The method of claim 1, wherein the multi-user wireless system is a multi-user full duplex system and the transmission point is a base transceiver station, BTS, further comprising the method step of
scheduling, by the BTS, data transmission to the wireless device among the plurality of wireless devices from the BTS on a frequency resource when none of the at least one neighbor wireless device is scheduled to transmit to the BTS on the frequency resource, and performing the scheduling for each of the wireless devices of the plurality of wireless devices.

8. A network component (700) configured to perform any of the methods according to claims 1-7.

## Patentansprüche

1. Verfahren zum "Scheduling" von Übertragungen in einem drahtlosen Mehrbenutzersystem, wobei das Verfahren Folgendes umfasst:
• Bestimmen, durch einen Sendepunkt, von mindestens einer benachbarten drahtlosen Einrichtung für jede einer Mehrzahl von in einem Abdeckungsbereich des Sendepunkts positionierten drahtlosen Einrichtungen (S 602);
• Durchführen eines ersten "Scheduling" für das "Scheduling", durch den Sendepunkt, einer drahtlosen Einrichtung unter der Mehrzahl von Einrichtungen entsprechend der Umgebungsinformation der mindestens einen an die drahtlose Einrichtung angrenzenden benachbarten Einrichtung zum Senden von Daten über unterschiedliche Zeit-Frequenz-Ressourcen in Bezug auf die, in denen das Empfangen von Daten durch die mindestens eine benachbarte Einrichtung geplant ist, und Durchführen der ersten Planung für jede der drahtlosen Einrichtungen der Mehrzahl von drahtlosen Einrichtungen (S 604);
• Durchführen eines zweiten "Scheduling" für das "Scheduling", durch den Sendepunkt, der drahtlosen Einrichtung der Mehrzahl von drahtlosen Einrichtungen zum Senden von Daten zu dem Sendepunkt auf einer Zeit-Frequenz-Ressource zu einer gleichen Zeit, zu der das Empfangen von Daten von dem Sendepunkt auf der Zeit-Frequenz-Ressource durch mindestens eine nicht an die drahtlose Einrichtung angrenzende nicht benachbarte drahtlose Einrichtung geplant ist, und Durchführen der zweiten Planung für jede der drahtlosen Einrichtungen der Mehrzahl von drahtlosen Einrichtungen.

2. Verfahren nach Anspruch 1, weiter umfassend "Scheduling" von mindestens einer drahtlosen Einrichtung der Mehrzahl von drahtlosen Einrichtungen zum Senden von "Channel Sounding" oder von Steuersignalisierung oder von Verkehr mit niedrigem Datendurchsatz auf der Zeit-Frequenz-Ressource.

3. Verfahren nach Anspruch 1, weiter umfassend das Koordinieren von Planungen mit einer anderen BTS, wobei das Koordinieren von Planungen mit einer anderen BTS das Bestimmen von benachbarten Einrichtungen für mindestens eine drahtlose Einrichtung der Mehrzahl von drahtlosen Einrichtungen im Abdeckungsbereich für die BTS und in einem Abdeckungsbereich für die andere BTS umfasst, wobei mindestens eine drahtlose Einrichtung im Abdeckungsbereich für die BTS eine benachbarte Einrichtung der mindestens einen drahtlosen Einrichtung im Abdeckungsbereich für die andere BTS ist.

4. Verfahren nach Anspruch 1, weiter umfassend das Koordinieren von Planungen mit einer anderen BTS, wobei das Koordinieren von Planungen mit einer anderen BTS das Bestimmen einer Planung für mindestens eine drahtlose Einrichtung der Mehrzahl von drahtlosen Einrichtungen im Abdeckungsbereich für die BTS und für mindestens eine der drahtlosen Einrichtungen in einem Abdeckungsbereich für die andere BTS und das Senden der Planung zu der anderen BTS umfasst.

5. Verfahren nach Anspruch 1, wobei dedizierte Ressourcen mindestens einer drahtlosen Einrichtung der Mehrzahl von drahtlosen Einrichtungen an einem Rand des Abdeckungsbereichs für den Sendepunkt zugewiesen sind.

6. Verfahren nach Anspruch 1, wobei der Sendepunkt im Vollduplex-Modus arbeitet.

7. Verfahren nach Anspruch 1, wobei das drahtlose Mehrbenutzersystem ein Vollduplex-Mehrbenutzersystem ist und der Sendepunkt eine Basissendeempfängerstation, BTS, ist, weiter umfassend den Verfahrensschritt des
"Scheduling", durch die BTS, von Datenübertragung zu der drahtlosen Einrichtung unter der Mehrzahl von drahtlosen Einrichtungen von der BTS auf einer Frequenzressource, wenn für keine der mindestens einen benachbarten drahtlosen Einrichtung ein Senden an die BTS auf der Frequenzressource geplant ist, und der Durchführung des "Scheduling" für jede der drahtlosen Einrichtungen der Mehrzahl von drahtlosen Einrichtungen.

8. Netzwerkkomponente (700), dafür ausgelegt, eines der Verfahren nach den Ansprüchen 1-7 durchzuführen.

## Revendications

1. Procédé de planification de transmissions dans un système sans fil multi-utilisateur, le procédé consistant à :
déterminer, par un point de transmission, au moins un dispositif sans fil voisin pour chacun d'une pluralité de dispositifs sans fil situés dans une zone de couverture du point de transmission (S602) ;
• exécuter une première planification d'une planification, par le point de transmission, d'un dispositif sans fil parmi la pluralité de dispositifs, en fonction des informations voisines de l'au moins un dispositif voisin avoisinant le dispositif sans fil, pour transmettre des données sur différentes ressources temps-fréquence que celles dans lesquelles l'au moins un dispositif voisin a planifié de recevoir des données, et exécuter la première planification pour chacun des dispositifs sans fil de la pluralité de dispositifs sans fil (S604) ;
• exécuter une seconde planification d'une planification, par le point de transmission, du dispositif sans fil de la pluralité de dispositifs sans fil pour transmettre des données au point de transmission sur une ressource temps-fréquence à un même moment lors duquel au moins un dispositif sans fil non voisin n'avoisinant pas le dispositif sans fil a planifié de recevoir des données à partir du point de transmission sur la ressource temps-fréquence, et mettre en oeuvre la seconde planification pour chacun des dispositifs sans fil de la pluralité de dispositifs sans fil.

2. Procédé selon la revendication 1, consistant en outre à planifier au moins un dispositif sans fil de la pluralité de dispositifs sans fil pour transmettre un élément parmi un sondage de canal, une signalisation de commande et un trafic de débit de données inférieur sur la ressource temps-fréquence.

3. Procédé selon la revendication 1, consistant en outre à coordonner des planifications avec une autre BTS (station d'émetteur-récepteur de base), coordonner des planifications avec une autre BTS consistant à déterminer des voisins pour au moins un dispositif sans fil de la pluralité de dispositifs sans fil dans la zone de couverture pour la BTS et dans une zone de couverture pour l'autre BTS, au moins un dispositif sans fil dans la zone de couverture pour la BTS étant un voisin d'au moins un dispositif sans fil dans la zone de couverture pour l'autre BTS.

4. Procédé selon la revendication 1, consistant en outre à coordonner des planifications avec une autre BTS, coordonner des planifications avec une autre BTS consistant à déterminer une planification pour au moins un dispositif sans fil de la pluralité de dispositifs sans fil dans la zone de couverture pour la BTS et pour au moins un des dispositifs sans fil dans une zone de couverture pour l'autre BTS, et transmettre la planification à l'autre BTS.

5. Procédé selon la revendication 1, dans lequel des ressources dédiées sont allouées à au moins un dispositif sans fil de la pluralité de dispositifs sans fil sur un bord de la zone de couverture pour le point de transmission.

6. Procédé selon la revendication 1, dans lequel le point de transmission fonctionne dans un mode en duplex total.

7. Procédé selon la revendication 1, dans lequel le système sans fil multi-utilisateur est un système multi-utilisateur en duplex total et le point de transmission est une station d'émetteur-récepteur de base, BTS, comprenant en outre l'étape du procédé consistant à :
planifier, grâce à la BTS, une transmission de données au dispositif sans fil parmi la pluralité de dispositifs sans fil à partir de la BTS sur une ressource de fréquence lorsqu'aucun dispositif parmi l'au moins un dispositif sans fil voisin n'est planifié pour transmettre à la BTS sur la ressource de fréquence, et mettre en oeuvre la planification pour chacun des dispositifs sans fil de la pluralité de dispositifs sans fil.

8. Composant de réseau (700) configuré pour mettre en oeuvre l'un quelconque des procédés selon les revendications 1 à 7.
